# EUROPÄISCHE PATENTSCHRIFT

(11) **EP 1 174 004 B1**
(45) Veröffentlichungstag und Bekanntmachung des Hinweises auf die Patenterteilung: **26.02.2003**
(21) Anmeldenummer: 00938510.5
(22) Anmeldetag: 20.04.2000
(51) Int. Cl.: H05B 7/144, H05B 7/11, H02M 7/162, H02J 3/18

(54) **VERFAHREN UND VORRICHTUNG ZUR STROMVERSORGUNG EINES ÜBER EINEN LICHTBOGEN BETRIEBENEN SCHMELZAGGREGATES**
METHOD AND DEVICE FOR SUPPLYING AN ELECTRIC ARC MELTING FURNACE WITH CURRENT
PROCEDE ET DISPOSITIF POUR ALIMENTER EN COURANT UNE UNITE DE FUSION A ARC ELECTRIQUE

(30) Priorität: 23.04.1999 DE 19920049
(43) Veröffentlichungstag der Anmeldung: 23.01.2002
(73) Patentinhaber: SMS Demag AG, 40237 Düsseldorf (DE)
(72) Erfinder: BREKER, Dirk, D-59379 Selm (DE); ESPENDILLER, Bernhard, D-48249 Dülmen (DE); GRUND, Guido, D-46282 Dorsten (DE); SCHMALE, Klaus, D-47836 Moers (DE)
(74) Vertreter: Meissner, Peter E., Dipl.-Ing.
(86) Internationale Anmeldenummer: DE0001305
(87) Internationale Veröffentlichungsnummer: WO00065878

(56) Entgegenhaltungen:
- EP-A- 0 766 374
- DE-A- 4 118 756
- US-A- 3 999 117

## Beschreibung

Die Erfindung betrifft ein Verfahren und eine entsprechende Vorrichtung zur Stromversorgung eines über einen Lichtbogen betriebenen Schmelzaggregates zum Schmelzen und Erwärmen von Metall, insbesondere Stahl, das mit mindestens zwei Elektroden betrieben wird.

Metalle, insbesondere Stahl, werden in Schmelzaggregaten regelmäßig durch einen Lichtbogen geschmolzen und erwärmt. Diese elektrisch betriebenen Schmelzaggregate, insbesondere Elektrolichtbogenöfen, werden mit Gleichstrom, Wechselstrom oder Drehstrom betrieben. Üblicherweise wird hierzu mindestens eine Elektrode eingesetzt, die durch den Ofendeckel hindurchgeführt in das Ofengefäß hineinragt, während die übrigen Elektroden entsprechend der ersten vorgesehen oder im Boden des Schmelzgefäßes angeordnet sind.

Aus DE-OS 25 10 326 ist ein Lichtbogenofen zum Schmelzen und Feinen von Metall, insbesondere von Stahlschrott, bekannt, bei dem der Ofen mit einer Gleichspannungsquelle betreibbar ist und mindestens eine Elektrode einer Polarität aufweist, die in einem Behandlungsgefäß zum Zwecke der Berührung mit der Charge montiert ist und eine weitere Anzahl von Elektroden entgegengesetzter Polarität aufweist, die oberhalb der Charge in das Gefäß hineinragen. Die erforderliche elektrische Leistung wird bei diesem bekannten Ofen über einen in Stern-Dreieck geschalteten Transformator zugeführt, dessen Sekundärwicklungen mit den jeweiligen Phasen getrennt an den Phaseneingang eines Doppelwellengleichrichters angeschaltet sind.

Bei dieser bekannten Speisung des Lichtbogens sind weder Vorrichtungen zur Verhinderung von Rückwirkungen auf das Netz vorgesehen, noch kann die elektrische Leistung zum Einschmelzen der Charge beliebig eingestellt werden.

Aus DE 41 18 756 C2 ist ein Gleichstromlichtbogenofen mit einer in das Ofengefäß hineinragenden als Kathode ausgebildete Elektrode und mindestens zwei Bodenelektroden bekannt, wobei die Elektroden über Stromleitungen mit steuerbaren Gleichrichtern verbunden sind. Als Gleichrichter werden mindestens zwei 6-polige Thyristorsätze eingesetzt.

Der Gegenstand dieses Dokumentes widmet sich dem Problem der Beeinflussung des Lichtbogens beim Gleichstromlichtbogenofen und nimmt hierfür andere systembedingte Nachteile, wie z.B. die unerwünscht hohen Netzrückwirkungen sowie einen schlechten elektrischen Wirkungsgrad und eine eingeschränkte Anlagenverfügbarkeit in Kauf.

Aus DE 195 36 545 ist eine Einrichtung zur Gleichstromversorgung eines Schmelzaggregates bekannt, die sich dem Problemkreis der Verbesserung der Netzrückwirkungen von Thyristorstellern widmet. Aus dieser Schrift ist es bekannt, Einfluß auf die Rückwirkungen mit Hilfe von steuerbaren Zündwinkeln zu nehmen, wobei die auftretenden Netzrückwirkungen nur eingeschränkt zu verbessern sind. Nachteil dieser Lösung ist eine eingeschränkte Verfügbarkeit der Schmelzleistung bei Ausfall von Bauteilen. Weiterhin treten bei der gewählten Art der unsymmetrisch angesteuerten Zündwinkel bei Thyristorstellern zwischenharmonische Oberwellenströme auf, die eine unerwünschte Netzbelastung darstellen.

Aus EP 0 429 774 A1 ist eine Einrichtung bekannt, die sich dem Problem der Reduzierung von Netzrückwirkungen von Drehstromöfen widmet. Hierfür wird eine steuerbare im Eingangskreis des versorgenden Drehstromtransformators geschaltete Drossel vorgeschlagen.

Mit dem aus dieser Schrift bekannten Gegenstand kann jedoch nur in bestimmten Grenzen die Netzrückwirkungen reduziert werden, da die Leistungsgröße der eingangsseitig geschalteten Drossel einen Einfluß auf das prozeßtechnische Verhalten des Lichtbogens nimmt. Somit sind normalerweise zusätzliche Einrichtungen erforderlich, um die Netzrückwirkungen auf das erforderliche Maß zu mindern.

Die Erfindung hat zum Ziel, ein Verfahren und eine entsprechende Vorrichtung zur Speisung eines Lichtbogens zum Schmelzen von Metall, insbesondere Stahl, zu schaffen, bei dem mit einfachen und konstruktiven Mitteln Netzrückwirkungen auf ein Minimum reduziert werden, eine Erhöhung des elektrischen Wirkungsgrades erreicht und gleichzeitig die Betriebsmittelnutzungszeit des Schmelzaggregates gesteigert wird.

Die Erfindung erreicht dieses Ziel durch die Merkmale des Verfahrensanspruchs 1 und des Vorrichtungsanspruchs 8.

Erfindungsgemäß wird der von einer Drehstromquelle aus dem Netz entnommene elektrische Strom auf mindestens zwei zueinander parallel angeordnete Stromversorgungsmodule aufgeteilt.

Die einzelnen Stromversorgungsmodule weisen in Reihe geschaltet der Stromrichtung folgend eine ungesteuerte Drehstrombrücke, einen Gleichstromzwischenkreis und eine Transistoreinheit auf. In jedem einzelnen Stromzweig wird der Strom von der Drehstrombrücke als Gleichstrom eingespeist und in den einzelnen Gleichstromzwischenkreisen zwischengespeichert. Die gleichgerichteten Teilstromkreise werden anschließend durch die Transistoreinheiten einzelnd gesteuert und über Stromführungen den einzelnen Elektroden zu- bzw. von diesem rückgeleitet.

Die Speicherkapazität der einzelnen Gleichstromzwischenkreise sind so ausgebildet, daß die durch den Betrieb des Lichtbogens bzw. der Lichtbögen entstehenden Spannungsschwankungen kompensiert werden. Hierdurch ist eine gleichförmige Belastung des speisenden Netzes gewährleistet. Die einzelnen Strommodule sind in ihrem Aufbau und in der gewählten Anzahl so ausgestaltet, daß die Blindleistungsaufnahme der Stromversorgungseinheit konstant gehalten werden kann.

Weiterhin werden die Stromversorgungsmodule in ihrer Anzahl so gewählt, daß bei Betriebsmittelstörung bei der gezielten Herausnahme einzelner Module oder Bauteile eine kontinuierliche Fortsetzung des Prozeßes ohne Einschränkung der geforderten Leistung möglich ist.
Die Transistoreinheiten jedes Stromversorgungsmoduls sind in einer vorteilhaften Ausgestaltung mit Bauteilen versehen, mit denen die Stromhöhe und Stromform bei konstantem Leistungsfaktor des speisenden Netzes entsprechend der während des Schmelzprozesses erforderlichen Leistung steuerbar ist.

Weiterhin sind die Transistoreinheiten jeweils an eine Regeleinheit angeschlossen, mit der Einfluß auf die Stromart genommen wird. Erfindungsgemäß ist es möglich, mit der vorgeschlagenen Stromversorgung sowohl Gleichstrom, einphasigen Wechselstrom oder auch dreiphasigen Wechselstrom zu erzeugen.

Das über Stromleitungen mit der Stromversorgung verbundene Schmelzaggregat weist entsprechend der Stromart Elektroden auf, die entweder in das Ofengefäß hineinragen oder auch als Bodenelektrode ausgestaltet sind.

Die Stromversorgungsmodule können einzeln oder gruppenweise an in der Phase verschobenen Drehstromquellen angeschlossen werden und verbessern somit die daraus ergebenen Netzrückwirkungen in Form geringerer Oberwellenströme aufgrund der Charakteristik einer n x 6-pulsigen Schaltungsart.

Ein Beispiel der Erfindung ist in der beigefügten Zeichnung dargelegt. Dabei zeigen
- Figur 1: die Stromversorgung in Form des Gleichstroms,
- Figur 2: die Stromversorgung in Form von einphasigem Wechselstrom,
- Figur 3: die Stromversorgung in Form von Drehstrom.

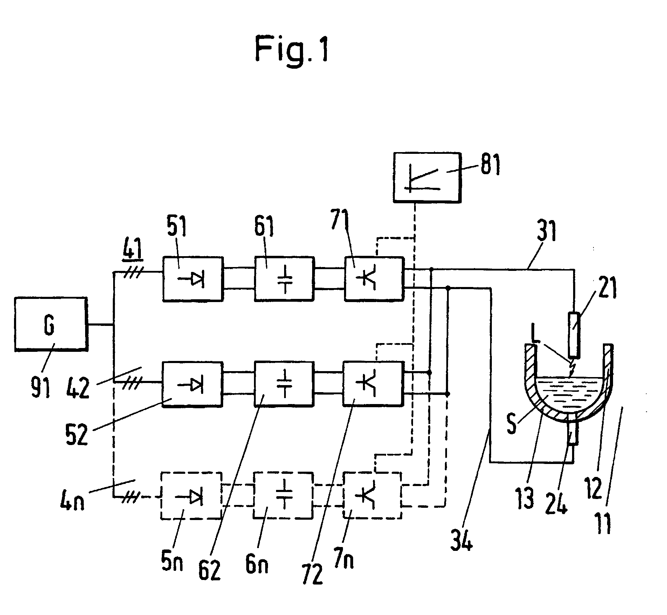

Die Figuren 1 bis 3 zeigen ein Schmelzaggregat 11, welches ein Gefäß 12 mit einem Boden 13 aufweist, und in das Schmelze S eingefüllt ist. In das Gefäß sind Elektroden 21 und/oder 22 und/oder 23, wobei in der Figur 1 eine Bodenelektrode 24 im Boden 13 des Schmelzaggregates 11 vorgesehen ist.

In allen drei Figuren ist eine Drehstromquelle 91 vorhanden, die mit einem nicht weiter dargestellten Netz verbunden ist. Die Drehstromquelle 91 ist mit mindestens zwei Stromversorgungsmodulen 41 und 42 und ggf. bis 4n verburiden. Jedes Stromversorgungsmodul 41 bis 4n weist in Reihe geschaltet eine Drehstrombrücke 51 bis 5n, einen Zwischenkreis 61 bis 6n und eine Transistoreinheit 71 bis 7n. Ausgangsseitig sind die Transistoreinheiten 71 bis 7n über Stromführungen 31 hin und 34 rück sowie Stromführungen 32, 33 und 35 jeweils hin und rück verbunden.

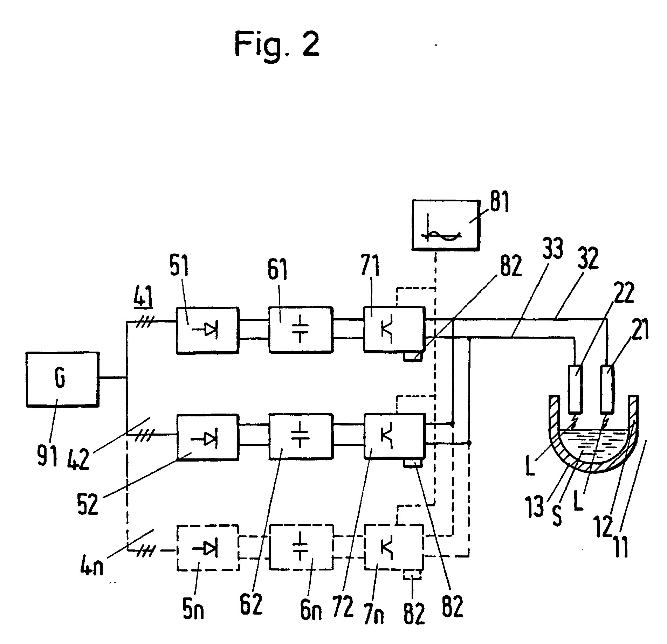

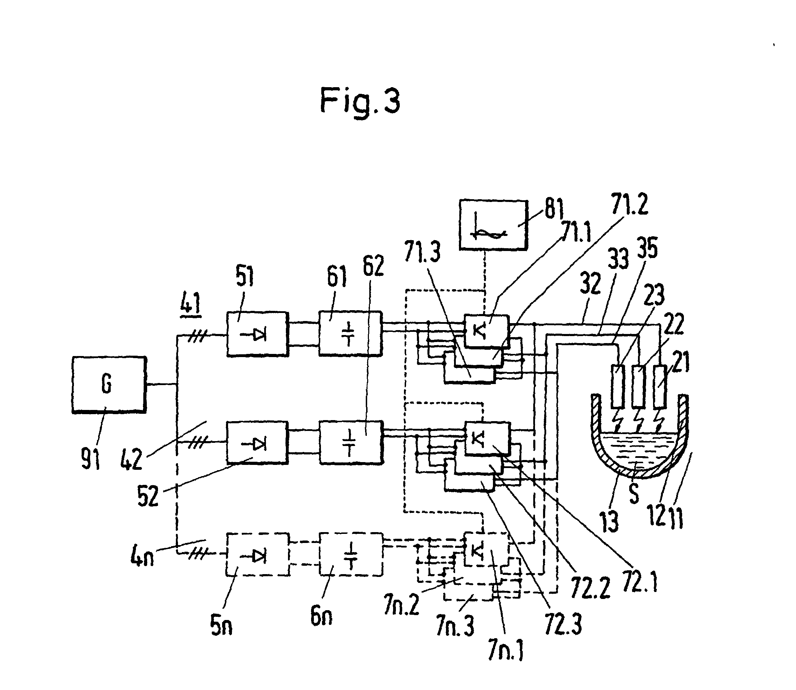

Darüber hinaus sind die Transistoreinheiten 71 bis 7n regeltechnisch mit einer Regeleinheit 81 verbunden und zwar in Figur 1 für Gleichstrom und in den Figuren 2 und 3 für Wechselstrom bzw. Drehstrom.

In der Figur 2 ragen in das Ofengefäß 12 die Elektroden 21 und 22, die über die Stromführungen 32 und 33 mit den Transistoreinheiten 71 bis 7n verbunden sind. Die einzelnen Transistoreinheiten 71 bis 7n besitzen Bauteile 82, mit denen die Stromhöhe bei konstantem Leistungsfaktor entsprechend der während des Schmelzprozeßes erforderlichen Leistung steuerbar sind.

In der Figur 3 ragen insgesamt drei Elektroden 21 bis 23 in den Ofengefäß 12 hinein, die über Stromführungen 32, 33 und 35 mit den jeweiligen Transistoreinheiten 71.1, 71.2 und 71.3 bis 7n.1, 7n.2 und 7n.3 in Verbindung stehen.

Weiterhin sind die Transistoreinheiten 71.1 bis 7n.3 regelungstechnisch mit der Regelvorrichtung 81 verbunden, mit denen Wechselströme bildbar sind, deren Summe 3-phasige Wechselströme bildend über jeweils die drei Stromzuführungen 32, 33 sowie 35 mindestens drei im Gefäß 12 vorgesehenen Elektroden 21 bis 23 sowohl zuwie auch rückführbar sind.

### Positionsliste

**Schmelzen**
   - 11: Schmelzaggregat
   - 12: Gefäß
   - 13: Boden
**Elektrodeneinrichtung**
   - 21: 1. Elektrode bzw. Elektrodensatz
   - 22.: 2. Elektrode bzw. Elektrodensatz
   - 23.: 3. Elektrode bzw. Elektrodensatz
   - 24.: Bodenelektrode bzw. Bodenelektrodensatz
**Stromzuführung**
   - 31: 1. Stromzuführung hin
   - 32.: 1. Stromzuführung hin/rück
   - 33.: 2. Stromzuführung hin/rück
   - 34.: 2. Stromzuführung rück
   - 35.: 3. Stromzuführung hin/rück
   - 36.: 3. Stromzuführung rück
**Module**
   - 41 bis 4n: 1. bis n-tes Stromversorgungsmodul
**Brücken**
   - 51 bis 5n: 1. bis n-te Drehstrombrücke
**Zwischenkreise**
   - 61 bis 6n: 1. bis n-ter Gleichstromzwischenkreis
**Transistor**
   - 71 bis 7n: 1. bis n-te Transistoreinheit
**Regeln**
   - 81: Regeleinheit
   - 82: Bauteile zur Stromregelung
**Quelle**
   - 91: Drehstromquelle

## Patentansprüche

1. Verfahren zur Stromversorgung eines über einen Lichtbogen betriebenen Schmelzaggregates zum Schmelzen und Erwämen von Metall, insbesondere Stahl, das mit mindestens zwei Elektroden betriebenen wird,
**gekennzeichnet durch** folgende Schritte:
a) Der von einer Drehstromquelle aus dem Netz entnommene elektrische Strom wird auf mindestens zwei parallel angeordnete Stromversorgungsmodule aufgeteilt.
b) In jedem Stromversorgungsmodul wird der Strom über eine ungesteuerte Drehstrombrücke als Gleichstrom eingespeist.
c) Anschließend wird der Strom in einzelnen Gleichstromzwischenkreisen zwischengespeichert.
d) Die gleichgerichteten Teilstromkreise werden **durch** Transistoreinheiten einzeln gesteuert und
e) anschließend in einer ersten Stromzuführung zusammengeführt und zu einer Elektrode des Schmelzaggregates hin- und in Abhängigkeit der gewählten Stromart in einer zweiten bzw. dritten Stromzuführung von einer zweiten und/oder einer dritten Elektrode bzw. eines Elektrodensatzes zurückgeleitet.

2. Verfahren nach Anspruch 1,
**dadurch gekennzeichnet,**
**daß** der primäre Leistungsfaktor der Stromversorgungseinheit durch die eingangsseitig geschaltete Drehstrombrücke konstant hoch gehalten wird.

3. Verfahren nach Anspruch 1,
**dadurch gekennzeichnet,**
**daß** die einzelnen Gleichstromzwischenkreise bezüglich ihrer Kapazität mit einer Strommenge versorgt werden, bei der beliebige Laststörungen des Lichtbogens nicht negativ auf das Netz zurückwirken.

4. Verfahren nach Anspruch 1,
**dadurch gekennzeichnet,**
**daß** die Phasenverschiebung der speisenden Drehstromquelle in n-fache in der Phase verschobenen Wicklungen in der Weise aufgeteilt wird, daß ihre Charakteristik der einer n x 6-pulsigen Schaltungsart entspricht.

5. Verfahren mindestens einem der Ansprüche 1 bis 4,
**dadurch gekennzeichnet,**
**daß** die gleichgerichteten Teilströme von den Transistoreinheiten in der Weise gesteuert werden, daß der in die erste Stromzuführung geleitete Strom ein zur mindestens einer als Kathode ausgebildeten Elektrode geführter Gleichstrom ist.

6. Verfahren nach einem der Ansprüche 1 bis 4,
**dadurch gekennzeichnet,**
**daß** die gleichgerichteten Teilströme von den Transistoreinheiten in der Weise gesteuert werden, daß der in die Stromzuführung geleitete Strom ein einphasiger Wechselstrom ist.

7. Verfahren nach einem der Ansprüche 1 bis 4,
**dadurch gekennzeichnet,**
**daß** jeweils drei der gleichgerichteten Teilströme von den Transistoreinheiten um 120 Grad elektrisch phasenverschoben eine Drehstromeinheit bilden, die in jeweils drei Stromzuführungen als dreiphasige Wechselströme mit mindestens drei dem Schmelzgefäß zugeordneten Elektroden zugeführt und abgeführt werden.

8. Vorrichtung zur Stromversorgung eines über einen Lichtbogen betriebenen Schmelzaggregates zum Schmelzen und Erwärmen von Metall, insbesondere Stahl, mit Drehstromquelle, die den Strom über Einrichtungen zum Erzeugen von Gleichstrom oder Wechselstrom an mindestens eine in das Gefäß des Schmelzaggregates hineinragenden Elektrode abgibt,
zur Durchführung des Verfahrens nach Anspruch 1,
**dadurch gekennzeichnet,**
**daß** der Drehstromquelle (91) mindestens zwei parallel geführte Stromversorgungsmodule (41, 4n) nachgeschaltet sind,
**daß** jedes Stromversorgungsmodul (41, 41n) in Reihe geschaltet eine ungesteuerte Drehstrombrücke (51, 5n) , einen Gleichstromzwischenkreis (61, 6n) und eine Transistoreinheit (71, 7n) aufweist, und
**daß** in Stromrichtung nach den Stromversorgungsmodulen (41, 4n) eine gemeinsame Stromzuführung (31) zu mindestens einer Elektrode (21) des Schmelzaggregates (11) und mindestens einer anderen Elektrode (22 bzw. 24) weg vorgesehen ist.

9. Vorrichtung zur Stromversorgung nach Anspruch 8,
**dadurch gekennzeichnet**,'
daß die Drehstrombrücke (51, 5n) ungesteuert ist, und
daß mit ihr ein in Reihe geschalteter Gleichstromzwischenkreis (61, 6n) speisbar ist.

10. Vorrichtung zur Stromversorgung nach Anspruch 9,
**dadurch gekennzeichnet,**
**daß** die Transistoreinheiten (71, 7n) Bauteile (82) enthalten, mit denen die Stromhöhe bei konstantem Leistungsfaktor entsprechend der während des Schmelzprozesses erforderlichen Leistung steuerbar ist.

11. Vorrichtung zur Stromversorgung nach Anspruch 10,
**dadurch gekennzeichnet,**
**daß** die Transistoreinheiten (71, 7n) mit Regelvorrichtungen (81) verbunden sind, mit denen ein Gleichstrom bildbar ist, der über eine erste Stromleitung (31) zu mindestens einer Elektrode (21) im Gefäß (12) des Schmelzaggregates (11) und über mindestens eine zweite Elektrode (22), insbesondere eine Bodenelektrode bzw. einen Bodenelektrodensatz (24), vom Gefäß (12) wegführbar ist.

12. Vorrichtung zur Stromversorgung nach Anspruch 10,
**dadurch gekennzeichnet,**
**daß** die Transistoreinheiten (71, 7n) mit Regelvorrichtungen (81) verbunden sind, mit denen ein einphasiger Wechselstrom bildbar ist, der über Stromleitungen (31, 32) an mindestens zwei Elektroden (21, 22) zum Gefäß (12) des Schmelzaggregates (11) hin- und von diesem rückführbar ist.

13. Vorrichtung zur Stromversorgung nach Anspruch 10,
**dadurch gekennzeichnet,**
**daß** die Transistoreinheiten (71, 7n) mit Regelvorrichtungen (81) verbunden sind, mit denen Wechselströme bildbar sind, deren Summe dreiphasige Wechselströme bildend über jeweils drei Stromzuführungen (32, 33, 35) mindestens drei im Gefäß (12) vorgesehenen Elektroden (21, 22, 23 und/oder 24) zuführbar wie auch rückführbar sind.

14. Vorrichtung zur Stromversorgung nach Anspruch 13,
**dadurch gekennzeichnet,**
**daß** die durch die mit den Transistoreinheiten (71, 7n) verbundenen Regelvorrichtungen (81) Wechselströme bilden, die um jeweils 120 elektrische Grad verschoben sind.

## Claims

1. A method for supplying electricity to a smelting unit, which is operated via an arc, for smelting and heating metal, in particular steel, which unit is operated with at least two electrodes,
**characterised by** the following steps:
a) the electric current taken from the mains from a three-phase current source is distributed to at least two power supply modules arranged in parallel,
b) in each power supply module, the current is fed in as direct current via an uncontrolled three-phase bridge,
c) then the current is temporarily stored in individual d.c. intermediate circuits,
d) the rectified partial electrical circuits are individually controlled by transistor units, and
e) are then brought together in a first current supply means and passed to an electrode of the smelting unit and, depending on the type of current selected, are passed back to a second and/or a third electrode or a set of electrodes in a second or third current supply means respectively.

2. A method according to Claim 1, **characterised in that** the primary power factor of the current supply unit is kept constantly high by the three-phase bridge connected on the input side.

3. A method according to Claim 1, **characterised in that** the individual d.c. intermediate circuits in terms of their capacity are supplied with a quantity of current for which any load disruptions of the arc do not have negative repercussions on the mains.

4. A method according to Claim 1, **characterised in that** the phase shift of the feeding three-phase current source is divided up into windings which are n times phase-shifted, such that their characteristics correspond to that of an n x 6-pulse connection type.

5. A method according to at least one of Claims 1 to 4, **characterised in that** the rectified partial currents are controlled by the transistor units such that the current passed into the first current supply means is a direct current passed to the at least one electrode designed as a cathode.

6. A method according to one of Claims 1 to 4, **characterised in that** the rectified partial currents are controlled by the transistor units such that the current passed into the current supply means is a single-phase alternating current.

7. A method according to one of Claims 1 to 4, **characterised in that** in each case three of the rectified partial currents of the transistor units, electrically phase-shifted by 120 degrees, form a three-phase current unit which is supplied to and removed from in each case three current supplies as three-phase currents with at least three electrodes associated with the smelting vessel.

8. A device for supplying electricity to a smelting unit, which is operated via an arc, for smelting and heating metal, in particular steel, with a three-phase current source which delivers the current via means for generating direct current or alternating current to at least one electrode which projects into the vessel of the smelting unit, for performing the method according to Claim 1,
**characterised in that**
the three-phase current source (91) is succeeded by at least two power supply modules (41, 4n) connected in parallel,
that each power supply module (41, 4n), connected in series, has an uncontrolled three-phase bridge (51, 5n), a d.c. intermediate circuit (61, 6n) and a transistor unit (71, 7n), and
that a common current supply means (31) to at least one electrode (21) of the smelting unit (11) and at least one other electrode (22 or 24) is provided in the direction of current after the power supply modules (41, 4n).

9. A device for supplying electricity according to Claim 8, **characterised in that** the three-phase bridge (51, 5n) is uncontrolled and that a d.c. intermediate circuit (61, 6n) connected in series can be fed therewith.

10. A device for supplying electricity according to Claim 9, **characterised in that** the transistor units (71, 7n) contain components (82) with which the current level can be controlled at a constant power factor corresponding to the power required during the smelting process.

11. A device for supplying electricity according to Claim 10, **characterised in that** the transistor units (71, 7n) are connected to regulating devices (81) with which a direct current can be formed, which can be carried via a first power supply line (31) to at least one electrode (21) in the vessel (12) of the smelting unit (11) and can be carried away from the vessel (12) via at least one second electrode (22), in particular a bottom electrode or a set of bottom electrodes (24).

12. A device for supplying electricity according to Claim 10, **characterised in that** the transistor units (71, 7n) are connected to regulating devices (81) with which a single-phase alternating current can be formed, which can be carried via power supply lines (31, 32) to at least two electrodes (21, 22) to the vessel (12) of the smelting unit (11) and back therefrom

13. A device for supplying electricity according to Claim 10, **characterised in that** the transistor units (71, 7n) are connected to regulating devices (81) with which alternating currents can be formed, the total of which, forming three-phase alternating currents, can be carried via three power supply lines (32, 33, 35) in each case to at least three electrodes (21, 22, 23 and/or 24) provided in the vessel (12) and also back therefrom

14. A device for supplying electricity according to Claim 13, **characterised in that** the regulating devices (81) by the connected to the transistor units (71, 7n) form alternating currents which are each shifted by 120 electrical degrees.

## Revendications

1. Procédé pour l'alimentation en courant d'un appareil de fusion fonctionnant grâce à un arc électrique pour fondre et réchauffer du métal, en particulier de l'acier, qui fonctionne à l'aide d'au moins deux électrodes,
**caractérisé par** les étapes suivantes :
a) le courant électrique prélevé par une source de courant triphasé du réseau est réparti en au moins deux modules d'alimentation en courant agencés parallèlement,
b) dans chaque module d'alimentation en courant, le courant est alimenté comme courant continu par l'intermédiaire d'un pont de courant triphasé non commandé,
c) ensuite, le courant est stocké de façon intermédiaire dans des circuits intermédiaires individuels de courant continu,
d) les circuits de courant partiels redressés sont commandés individuellement par des unités à transistors, et
e) ensuite, réunis dans une première amenée de courant et ramenés vers une électrode de l'appareil de fusion et, de façon dépendant du type de courant choisi, dans une deuxième ou troisième amenée de courant, d'une deuxième et/ou d'une troisième électrode ou d'un jeu d'électrodes.

2. Procédé selon la revendication 1,
**caractérisé en ce que** le facteur de puissance primaire de l'unité d'alimentation en courant est maintenu constamment élevé par le pont de courant triphasé monté du côté d'entrée.

3. Procédé selon la revendication 1,
**caractérisé en ce que** les circuits intermédiaires individuels de courant continu sont alimentés relativement à leur capacité par une quantité de courant pour laquelle des problèmes de charge quelconques de l'arc électrique ne s'exercent pas de façon négative sur le réseau.

4. Procédé selon la revendication 1,
**caractérisé en ce que** le décalage de phase de la source de courant triphasé d'alimentation est réparti dans n enroulements décalés en phase de façon que sa caractéristique correspond à un type de circuit à n x 6 impulsions.

5. Procédé selon au moins une des revendications 1 à 4,
**caractérisé en ce que** les courants partiels redressés sont commandés par les unités à transistors de façon que le courant guidé dans la première amenée de courant est un courant continu guidé vers au moins une électrode réalisée comme cathode.

6. Procédé selon une des revendications 1 à 4,
**caractérisé en ce que** les courants partiels redressés sont commandés par les unités à transistors de façon que le courant guidé dans l'amenée de courant est un courant alternatif à une phase.

7. Procédé selon une des revendications 1 à 4,
**caractérisé en ce que**, à chaque fois, trois des courants partiels redressés par les unités à transistors forment, de façon décalée en phase électriquement de 120°, une unité à courant triphasé, courants qui sont amenés dans, à chaque fois, trois amenées de courant comme courants alternatifs triphasés avec au moins trois électrodes associées au récipient de fusion et en sont évacués.

8. Dispositif pour l'alimentation en courant d'un appareil de fusion fonctionnant grâce à un arc électrique pour fondre et réchauffer du métal, en particulier de l'acier, comportant une source de courant triphasé, qui fournit le courant par l'intermédiaire de dispositifs pour engendrer du courant continu ou du courant alternatif à au moins une électrode pénétrant dans le récipient de l'appareil de fusion, pour la mise en oeuvre du procédé selon la revendication 1,
**caractérisé en ce qu'**au moins deux modules d'alimentation de courant (41, 4n) guidés parallèlement sont disposés en aval de la source de courant triphasé (91), **en ce que** chaque module d'alimentation en courant (41, 4n) présente, montés en série, un pont de courant triphasé non commandé (51, 5n), un circuit intermédiaire de courant continu (61, 6n), et une unité à transistors (71, 7n), et **en ce que**, dans la direction du courant après les modules d'alimentation en courant (41, 4n), il est prévu une amenée de courant commune (31) vers au moins une électrode (21) de l'appareil de fusion (11) et au moins une autre électrode (22 ou 24).

9. Dispositif pour l'alimentation en courant selon la revendication 8,
**caractérisé en ce que** le pont de courant triphasé (51, 5n) est non commandé, et **en ce que**, par celui-ci, un circuit intermédiaire à courant continu monté en série (61, 6n) peut être alimenté.

10. Dispositif pour l'alimentation en courant selon la revendication 9,
**caractérisé en ce que** les unités à transistors (71, 7n) comportent des pièces (82) grâce auxquelles, pour un facteur de puissance constant, l'intensité du courant peut être commandée de façon correspondant à la puissance nécessaire pendant le processus de fusion.

11. Dispositif pour l'alimentation en courant selon la revendication 10,
**caractérisé en ce que** les unités à transistors (71, 7n) sont reliées à des dispositifs de réglage (81), grâce auxquels un courant continu peut être formé, qui peut être évacué du récipient (12) par l'intermédiaire d'une première liaison de courant (31) vers au moins une électrode (21) dans le récipient (12) de l'appareil de fusion (11) et par l'intermédiaire d'au moins une seconde électrode (22), en particulier une électrode de fond ou un jeu d'électrodes de fond (24).

12. Dispositif pour l'alimentation en courant selon la revendication 10,
**caractérisé en ce que** les unités à transistors (71, 7n) sont reliées à des dispositifs de réglage (81), grâce auxquels un courant alternatif à une phase peut être formé, qui peut être amené vers le récipient (12) de l'appareil de fusion (11) et ramené de celui-ci par l'intermédiaire de liaisons de courant (31, 32) à au moins deux électrodes (21, 22).

13. Dispositif pour l'alimentation en courant selon la revendication 10,
**caractérisé en ce que** les unités à transistors (71, 7n) sont reliées à des dispositifs de réglage (81), grâce auxquels des courants alternatifs peuvent être formés, dont la somme, en formant des courants alternatifs triphasés, peut être amenée par l'intermédiaire d'à chaque fois trois amenées de courant (32, 33, 35) à au moins trois électrodes (21, 22, 23 et/ou 24) prévues dans le récipient (12), comme également être ramenée.

14. Dispositif pour l'alimentation en courant selon la revendication 13,
**caractérisé en ce que** les dispositifs de réglage (81) reliés aux unités à transistors (71, 7n) forment des courants alternatifs qui sont décalés électriquement, à chaque fois, de 120°.
